# EUROPÄISCHE PATENTSCHRIFT

(11) **EP 0 734 350 B1**
(45) Veröffentlichungstag und Bekanntmachung des Hinweises auf die Patenterteilung: **29.11.2000**
(21) Anmeldenummer: 95935418.4
(22) Anmeldetag: 30.09.1995
(51) Int. Cl.: B66D 1/22, B66B 1/04, F16H 1/46

(54) **HEBEZEUGANTRIEB**
ELEVATOR DRIVE
MECANISME D'ENTRAINEMENT POUR ELEVATEUR

(30) Priorität: 07.10.1994 DE 4435849
(43) Veröffentlichungstag der Anmeldung: 02.10.1996
(73) Patentinhaber: ZF FRIEDRICHSHAFEN Aktiengesellschaft, 88038 Friedrichshafen (DE)
(72) Erfinder: MANN, Egon, 88045 Friedrichshafen (DE); MEISINGER, Erwin, 94051 Hauzenberg (DE)
(86) Internationale Anmeldenummer: EP9503879
(87) Internationale Veröffentlichungsnummer: WO9611161

(56) Entgegenhaltungen:
- WO-A-89/11436
- DE-A- 3 031 836
- DE-A- 3 840 281
- US-A- 4 461 460

## Beschreibung

Die Erfindung bezieht sich auf einen Hebezeugantrieb mit einem Motor, der eine in bezug auf einen feststehenden Nabenträger drehbar gelagerte Nabe über ein zweistufiges Planetengetriebe antreibt, dessen erster Planetenradsatz ein angetriebenes Sonnenrad und einen Planetenradträger aufweist, der mit einem Sonnenrad des zweiten Planetenradsatzes drehfest verbunden ist und dessen Planetenräder mit Hohlrädern in kämmendem Eingriff stehen, die mit gleicher Drehzahl umlaufen.

In der Hebezeugtechnik werden Aufzüge mit relativ niedrigen Geschwindigkeiten angetrieben. Daher werden entsprechend niedrige Drehzahlen an der Abtriebswelle des Hebezeugantriebs benötigt. In der Regel werden pol-umschaltbare Elektromotoren eingesetzt, die im ungeregelten Betrieb laufen. Die Kabine wird bis auf eine kurze Distanz an die Halteposition herangefahren, bevor sie dynamisch abgebremst wird, bis die Halteposition (Ausstieg) erreicht ist.

Ein Hebezeugantrieb stellt eine kompakte Antriebseinheit dar, die auf engstem Raum installiert und auch gewartet werden kann.

Aus der DE-A 38 40 281 ist ein Hebezeugantrieb bekanntgeworden, der aus selbständigen, demontablen Einheiten zusammengefügt ist. Diese bestehen aus einem Planetengetriebe mit einer Treibscheibe, einem als Ständer ausgebildeten Bremsgehäuse, in dem eine Sicherheitsbremse untergebracht ist, und aus einem Elektromotor.

Um die Geräuschemission zu verringern, weist der aus der EP-A 0 442 882 bekanntgewordene Hebezeugantrieb ein Planetengetriebe auf, dessen Eingangsplanetenradsatz schrägverzahnt und dessen zweite Planetenradstufe geradverzahnt ist. Die Antriebswelle ist zwischen dem Sonnenrad des Eingangsplanetenradsatzes und der Bremse, die zwischen dem Elektromotor und dem Planetengetriebe angeordnet ist, durch eine Kupplung unterteilt. Der mit der Bremsscheibe verbundene Teil der Antriebswelle ist in einem Flansch des Bremsgehäuses über ein Radialkugellager gelagert. Der andere Teil der Antriebswelle, der das Sonnenrad trägt, ist über ein weiteres Radialrillenkugellager 33 im Planetenradträger (Nabenträger) der zweiten Planetenradstufe drehbar gelagert. Bei diesem Getriebe kann es als nachteilig angesehen werden, daß die Antriebswelle zweigeteilt ist. Dies erhöht den baulichen Aufwand und die axiale Länge der Antriebseinheit.

In der Antriebstechnik gelangen in zunehmendem Maße elektrische Asynchron-Motoren zum Einsatz, die durch Frequenzumrichter drehzahlvariabel sind. In der Hebezeugtechnik werden diese Asynchron-Motoren in einem Drehzahlbereich von ca. 1 500 bis 2 600 U/min betrieben. Dies hat den Vorteil, daß Antriebsgeschwindigkeiten für die Kabine in einem Bereich von etwa 0,6 bis 2,5 m/sec einfach, d. h. ohne Übersetzungsanpassungen des Getriebes, realisiert werden können.

Durch den Einsatz von drehzahlvariablen Asynchron-Motoren werden Drehzahlbereiche (z. B. 1 700 bis 1 800 U/min) durchfahren, bei denen niederfrequente Schwingungen auftreten, die durch die Eingriffsfrequenzen zwischen der ersten und zweiten Planetenradstufe initiiert werden. Diese niederfrequenten Anregungen und auftretenden Oberwellen machen sich in der Kabine in der Weise bemerkbar, daß es durch Übertragung von Körperschall über Luftschwingungen zu Brummgeräuschen kommt. Diese Geräusche werden als sehr störend empfunden.

Der vorliegenden Erfindung liegt, ausgehend von einem Stand der Technik, wie er durch die DE 38 40 281 A1 offenbart wurde, die Aufgabe zugrunde, einen Hebezeugantrieb weiter zu verbessern, so daß er sich durch einen geringen baulichen Aufwand, eine reduzierte axiale Länge und ein besseres Schwingungs- bzw. Geräuschverhalten auszeichnet.

Erfindungsgemäß wird die gestellte Aufgabe dadurch gelöst, daß das Sonnenrad am freien Ende einer Antriebswelle drehfest angeordnet ist, die in einem Lager eines ortsfesten Flansches gelagert ist, und daß das Sonnenrad schrägverzahnt und über ein Lager, das axiale und radiale Kräfte aufnimmt, fliegend im Nabenträger oder in der Nabe gelagert ist.

Die erfindungsgemäße Lösung läßt sich in zumindest zwei konstruktiven Varianten realisieren. Bei einer ersten Konstruktionsvariante erfolgt der Antrieb der ersten Planetenradstufe über eine längere Antriebswelle und eine schrägverzahnte zweite Planetenradstufe, die als Standgetriebe ausgebildet ist. Bei einer zweiten konstruktiven Alternative erfolgt der Antrieb über eine kürzere Antriebswelle und eine ebenfalls schrägverzahnte zweite Planetenradstufe, die als Umlaufrädergetriebe ausgebildet ist. Beiden Varianten ist eine ungeteilte Antriebswelle gemeinsam, die in einem Flansch des Bremsgehäuses drehbar gelagert ist. Damit sich die Sonnenräder des ersten und zweiten Planetenradsatzes belastungsabhängig einstellen können, sind beide Sonnenräder fliegend gelagert.

Bei dem ersten konstruktiven Ausführungsbeispiel ist die Nabe über zwei Kegelrollenlager auf einem feststehenden Nabenträger drehbar gelagert. Bei dieser Ausführung sind die Hohlräder der beiden Planetenradstufen mit der Nabe drehfest verbunden.

Bei der zweiten konstruktiven Ausführungsform sind beide Planetenradstufen als Umlaufrädergetriebe ausgebildet. Ihre Hohlräder sind drehfest im feststehenden Nabenträger gehaltert. Die Nabe ist über zwei Kegelrollenlager, die einen relativ großen Abstand zueinander aufweisen, drehbar in bezug auf den Nabenträger gelagert.

Da die Antriebswelle zwischen dem Sonnenrad und einer Bremse im Flansch eines Bremsgehäuses gelagert ist, erfolgt der Antrieb der ersten Planetenradstufe über eine ungeteilte Antriebswelle, was den Aufwand für die Lagerung reduziert. Dennoch kann sich das Sonnenrad der ersten Planetenradstufe wegen der fliegenden Lagerung lastabhängig einstellen.

Zu den Mitteln, die das Sonnenrad und den Planetenradträger in bezug auf das Lager sichern, zählen bevorzugt Sprengringe oder axiale Anlaufscheiben bzw. gleich wirkende Maschinenelemente und/oder konstruktive Maßnahmen. Insbesondere bei höheren Leistungen führt eine drehfeste Lagerung der Hohlräder im Nabenträger zu einer kompakten Bauweise.

Um trotz hoher Leistungen relativ kleine Lager verwenden zu können, ist es vorteilhaft, die Nabe beidseitig - bezogen auf ihren Längsquerschnitt - über Lager, bevorzugt Kegelrollenlager, auf dem Nabenträger zu lagern. In diesem Fall ist ein Lager mit seinem Innenring in der Nabe und das andere Lager mit seinem Innenring auf dem feststehenden Nabenträger angeordnet.

Um störende Eingriffsfrequenzen und resultierende Oberwellen zu vermeiden, ist es vorteilhaft, das Abstimmungsverhältnis (Zähnezahlverhältnis zwischen der ersten und zweiten Planetenradstufe) nicht ganzzahlig zu wählen.

Um ein bestimmtes Anregungsverhältnis zu vermeiden bzw. um ein ungerades Anregungsverhältnis zu erzielen, ist es von Vorteil, für jede Planetenradstufe vier Planetenräder vorzusehen, deren Eingriff gleichzeitig erfolgt. Durch die Eingriffsfolge ist eine gezielte Beeinflussung der Eingriffsfrequenzen möglich. Oberwellen werden durch eine größere Überdeckung der miteinander kämmenden Zahnräder vermieden. Auch aus diesem Grund erweist sich eine Schrägverzahnung beider Planetenradsätze als sehr vorteilhaft.

Weitere, für die Erfindung wesentliche Merkmale sowie die daraus resultierenden Vorteile sind der nachfolgenden Beschreibung zweier Ausführungsbeispiele der Erfindung zu entnehmen.
Es zeigen:
- Fig. 1: ein erstes Ausführungsbeispiel eines Hebezeugantriebs mit einem zweistufigen Planetengetriebe, dessen zweite Stufe als Standgetriebe ausgebildet ist und
- Fig. 2: ein weiteres Ausführungsbeispiel eines Hebezeugantriebs, ebenfalls mit einem zweistufigen Planetengetriebe, bei dem beide Planetenradstufen als Umlaufrädergetriebe ausgelegt sind.

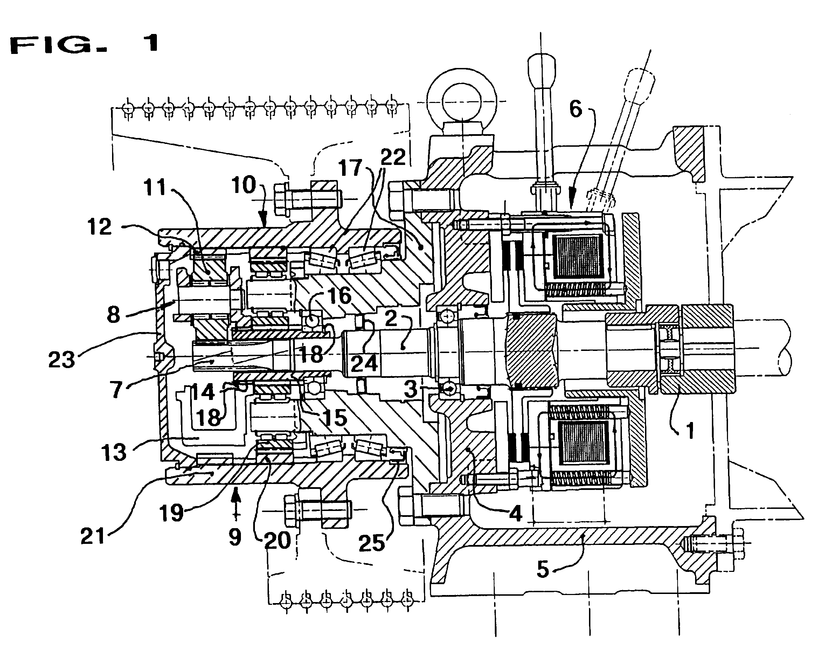

In Fig. 1 ist ein erster Hebezeugantrieb im Längsquerschnitt dargestellt. Ein nicht abgebildeter Antriebsmotor, bevorzugt ein drehzahlvariabler Asynchron-Motor, treibt über eine Kupplung 1 eine Antriebswelle 2.

Die Antriebswelle 2 ist etwa mittig - bezogen auf ihre Längenerstreckung - über ein einziges Lager 3, beispielsweise ein Rillenkugellager, in einem Flansch 4 eines Bremsgehäuses 5 drehbar gelagert. Innerhalb des Bremsgehäuses 5 ist eine Sicherheitsbremse 6 bekannter elektromagnetischer Bauart angeordnet. Die Wirkungsweise einer derartigen Bremse ist beispielsweise in der Druckschrift EP 0 442 882 B1 im einzelnen näher erläutert.

Die Antriebswelle 2 ist an ihrem freien (in der Zeichnung links liegenden) Ende mit einer Schrägverzahnung versehen, die ein Sonnenrad 7 einer ersten Planetenradstufe 8 eines Planetengetriebes 9 darstellt. Das Planetengetriebe 9 wird durch eine zweite Planetenradstufe 10 vervollständigt.

Mit dem Sonnenrad 7 stehen insgesamt vier Planetenräder 11 in kämmendem Eingriff. Die Planetenräder 11 stehen ferner mit einem innenverzahnten Hohlrad 12 im Eingriff.

Ein Steg 13 der ersten Planetenradstufe 8 greift mit einem innen- und schrägverzahnten Abschnitt 14 in eine Schrägverzahnung eines Sonnenrades 14 der zweiten Planetenradstufe 10 ein. Das Sonnenrad 15 ist als Hohlwelle ausgebildet. Zur Führung des Sonnenrades 15 (inneres Zentralrad) und zur Abstützung der auftretenden Axialkräfte ist ein Festlager, insbesondere ein Vier-Punkt-Lager 16, vorgesehen, mit dem das Sonnenrad 15 einseitig (fliegend) an einem ortsfest feststehenden Nabenträger 17 drehbar gelagert ist. Der Nabenträger 17 ist mit dem Bremsgehäuse 5 verschraubt. Die in beiden Drehrichtungen wirksamen Axialkräfte (Aufwärts- und Abwärtsfahrt) werden anteilig durch das Vier-Punkt-Lager aufgenommen. Hierzu ist der Steg 13 und das Vier-Punkt-Lager 16 sowie die Schrägverzahnung des Sonnenrades 15 durch Sicherungsmittel 18, bevorzugt Sprengringe, miteinander verblockt.

Der Nabenträger 17 ist gleichermaßen als Träger für Planetenräder 19 der zweiten Planetenradstufe 10 ausgebildet. Die Planetenräder 19, von denen insgesamt vier vorhanden sind, kämmen zum einen mit der Schrägverzahnung des Sonnenrades 15 und zum anderen mit einem schräg- und innenverzahnten Hohlrad 20, das, ebenso wie das Hohlrad 12, drehtest mit einer Nabe 21 des Hebezeugantriebs verbunden ist.

Die Nabe 21 ist über zwei baugleiche Kegelrollenlager 22 drehbar auf dem Nabenträger 17 gelagert.

Die Nabe 21 kann selbst als Seilscheibe ausgebildet sein. Im vorliegenden Fall weist sie einen Befestigungsflansch auf, an den Seilscheiben verschiedener Größen wahlweise angeschraubt werden können.

Die Nabe 21 ist durch einen Deckel 23 dicht verschlossen. Weitere Radialwellendichtringe 24 und 25 verhindern den Austritt von Getriebeöl aus dem Innenraum der Nabe 21.

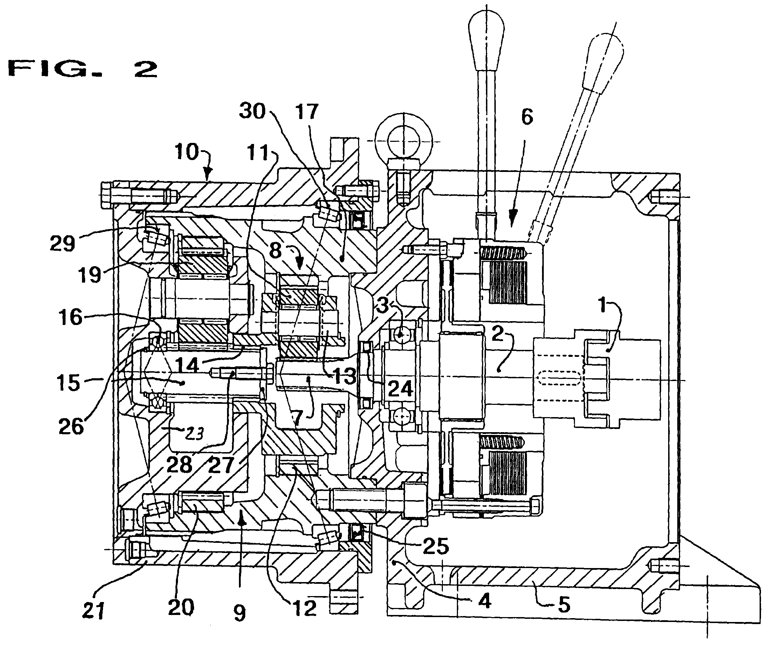

In Fig. 2 ist ein weiteres, konstruktiv abgewandeltes Ausführungsbeispiel eines Hebezeugantriebs im Längs-/Querschnitt abgebildet. Da die Konstruktionen nach den Fig. 1 und 2 prinzipiell übereinstimmen, werden im folgenden gleiche Bauteile mit gleichen Bezugsziffern gekennzeichnet. Die Antriebswelle 2 baut bei der Konstruktion nach Fig. 2 kürzer. Ihre Lagerung übernimmt ebenfalls das Lager 3 im Flansch 4 des Bremsgehäuses 5. Das Sonnenrad 7 kämmt ständig mit den Planeten 11 der ersten Planetenradstufe. Die Planeten 11 stehen im Zahneingriff mit dem Hohlrad 12. Das Hohlrad 12 ist feststehend im Nabenträger 17 gehaltert.

Der umlaufende Steg 13 der ersten Planetenradstufe 8 greift mit seinem innen- und schrägverzahnten Abschnitt 14 in die äußere Schrägverzahnung des Sonnenrades 15 der zweiten Planetenradstufe 10 ein. Der Planetenträger 13, die Schrägverzahnung des Sonnenrades 15 und das Vier-Punkt-Lager 16 sind wiederum in Axialrichtung miteinander verblockt. Die Sicherungsmittel 18 werden durch einen Sprengring 26 und eine Anlautscheibe 27 gebildet. Die Anlaufscheibe 27 ist durch eine Zentralschraube 28 mit dem Sonnenrad 15 verschraubt.

Im Unterschied zur Konstruktion nach Fig. 1 ist das Vier-Punkt-Lager 16 in einer Ausdrehung des Deckels 23 der Habe 21 des Hebezeugantriebs gelagert. Ein weiterer Sprengring 29 sichert das Vier-Punkt-Lager 16 im Deckel 23.

Die schrägverzahnte Sonne 15 steht in ständigem Eingriff mit den Planetenrädern 19 der zweiten Planetenradstufe 10 des Planetengetriebes 9. Das Hohlrad 20 ist, wie das Hohlrad 12, feststehend im Nabenträger 17 gelagert. Die Nabe 21 ist über in erstes Kegelrollenlager 29, das zwischen dem Deckel 23 und dem Nabenträger 17 eingesetzt ist, und einem zweiten Kegelrollenlager 30, das zwischen der Habe 21 und dem Nabenträger 17 eingesetzt ist, gelagert. Durch den relativ großen axialen Abstand beider Kegelrollenlager 29 und 30 zueinander ist eine günstige Abstützung der Last gegeben, so daß relativ niedrig belastbare Kegelrollenlager gewählt werden können.

Zur Abdichtung des Innenraumes der Nabe 21 dienen wiederum die Radialwellendichtringe 24 und 25.

Bei dem Ausführungsbeispiel nach Fig. 1 ist die erste Planetenradstufe als Umlaufrädergetriebe ausgebildet, während die zweite Planetenradstufe durch ein Standgetriebe gebildet wird. Die Hohlräder beider Planetenradstufen laufen um und sind drehfest mit der Nabe 21 verbunden. Das Sonnenrad ist als Hohlwelle ausgebildet und einseitig (fliegend) über ein Festlager in Form eines Vier-Punkt-Lagers 16 im Nabenträger 17 abgestützt. Die aus der Schrägverzahnung resultierenden Axialkräfte werden durch das Vier-Punkt-Lager 16 und die Kegelrollenlager 22 aufgenommen. Das Vier-Punkt-Lager 16 übernimmt zusätzlich Kräfte, die in Radialrichtung wirken.

Bei der in Fig. 2 abgebildeten Bauart stehen die Hohlräder 12 und 20 der ersten und zweiten Planetenradstufe im Nabenträger 17 fest. Sowohl der Steg 13 der ersten Planetenradstufe als auch der Steg (Deckel 23) der zweiten Planetenradstufe laufen um. Das Vier-Punkt-Lager 16, mit dem das Sonnenrad 15 der zweiten Planetenradstufe gelagert ist, ist im rotierenden Deckel 23 angeordnet.

Den vorstehend erläuterten Varianten eines Hebezeugantriebes ist gemeinsam, daß beide Planetenradstufen des Planetengetriebes schrägverzahnt sind. Das Abstimmungsverhältnis der ersten zur zweiten Planetenradstufe ist nicht ganzzahlig, so daß kein bestimmtes Anregungsverhältnis bzw. keine Frequenzübereinstimmung vorliegt. Die Eingriffsfolge der jeweils vier Planeten jeder Planetenradstufe ist gleichzeitig, so daß störende Eingriffsfrequenzen ebenso wie störende Oberwellen durch die höhere Überdeckung (ca. 2,6) der miteinander kämmenden, schrägverzahnten Zahnräder vermieden werden. Ebenso wie das Sonnenrad der ersten Planetenradstufe ist das Sonnenrad der zweiten Planetenradstufe fliegend gelagert, so daß es sich auf die Lastverhältnisse sehr gut einstellen kann. Die Fixierung des Sonnenrades der zweiten Planetenradstufe ist besonders einfach über ein einziges Festlager, das bevorzugt als Vier-Punkt-Lager ausgebildet ist, möglich. Bei praktischen Versuchen hat sich gezeigt, daß bei den dargestellten und beschriebenen Aufzuggetrieben tieffrequente Anregungen zuverlässig vermieden werden. Damit treten keine niederfrequenten Schwingungen auf, welche sich, insbesondere bei langen Seilübertragungen, bis in die Aufzugkabine hinein fortpflanzen und dort als störendes Brummgeräusch wahrgenommen werden könnten.

### Bezugszeichen

- 1: Kupplung
- 2: Antriebswelle
- 3: Lager
- 4: Flansch
- 5: Bremsgehäuse
- 6: Bremse
- 7: Sonnenrad
- 8: erste Planetenradstufe
- 9: Planetengetriebe
- 10: zweite Planetenradstufe
- 11: Planetenrad
- 12: Hohlrad
- 13: Steg
- 14: Abschnitt
- 15: Sonnenrad
- 16: Vier-Punkt-Lager
- 17: Nabenträger
- 18: Sicherungsmittel
- 19: Planetenrad
- 20: Hohlrad
- 21: Nabe
- 22: Kegelrollenlager
- 23: Deckel
- 24: Radialwellendichtring
- 25: Radialwellendichtring
- 26: Sprengring
- 27: Anlaufscheibe
- 28: Zentralschraube
- 29: Kegelrollenlager
- 30: Kegelrollenlager

## Patentansprüche

1. Hebezeugantrieb mit einem Motor, der eine in bezug auf einen feststehenden Nabenträger (17) drehbar gelagerte Nabe (21) über ein zweistufiges Planetengetriebe (9) antreibt, dessen erster Planetenradsatz (8) schrägverzahnt ist und ein angetriebenes Sonnenrad (7) aufweist und bei welchem der Abtrieb (13) mit einem Sonnenrad (15) des zweiten Planetenradsatzes (10) drehtest verbunden ist und dessen Planeten-
räder (11, 19) mit Hohlrädern (12, 20), welche die gleiche Drehzahl aufweisen, in kämmendem Eingriff stehen, dadurch **gekennzeichnet,** daß das Sonnenrad (7) des ersten Planetenradsatzes (8) am freien Ende einer Antriebswelle (2) drehtest angeordnet ist, die in einem Lager (3) eines ortstesten Flansches (4) gelagert ist, und daß das Sonnenrad (15) des zweiten Planetenradsatzes (10) schrägverzahnt ist und über ein Lager (16), das axiale und radiale Kräfte aufnimmt, fliegend im Nabenträger (17) oder in der Nabe (21) oder in einem mit der Nabe (21) drehtest verbundenen Deckel (23) gelagert ist.

2. Hebezeugantrieb nach Anspruch 1, dadurch **gekennzeichnet,** daß die Antriebswelle (2) zwischen dem Sonnenrad (7) des ersten Planetenradsatzes (8) und einer Bremse (6) im Flansch (4) eines Bremsgehäuses (5) gelagert ist.

3. Hebezeugantrieb nach Anspruch 1, **gekennzeichnet** durch Mittel (18, 26, 27, 28), die das Sonnenrad (15) des zweiten Planetenradsatzes (10) und den Planetenträger (13) in bezug auf das Lager (16) sichern.

4. Hebezeugantrieb nach Anspruch 1, dadurch **gekennzeichnet,** daß die Hohlräder (12, 20) drehtest im Nabenträger (17) oder in der Nabe (21) gelagert sind.

5. Hebezeugantrieb nach Anspruch 1, dadurch **gekennzeichnet,** daß die Nabe (21) beidseitig - bezogen auf ihren Längsquerschnitt - über Lager (29, 30) auf dem Nabenträger (17) gelagert ist.

6. Hebezeugantrieb nach Anspruch 5, dadurch **gekennzeichnet,** daß ein Lager (29) mit seinem Innenring in der Nabe (21, 23) und das andere Lager (30) mit seinem Innenring auf dem Nabenträger (17) angeordnet ist.

7. Hebezeugantrieb nach Anspruch 1, dadurch **gekennzeichnet,** daß das Zähnezahlverhältnis zwischen der ersten und zweiten Planetenradstufe (8, 10) nicht ganzzahlig ist.

8. Hebezeugantrieb nach Anspruch 1, dadurch **gekennzeichnet,** daß jede Planetenradstufe (8, 10) vier Planetenräder (11, 19) aufweist, deren Eingriff gleichzeitig erfolgt.

## Claims

1. Elevator drive with a motor, which drives a hub (21), which is rotatably mounted in relation to a stationary hub carrier (17), via a two-stage planetary gear unit (9), the first planet wheel set (8) of which is helically toothed and comprises a driven sun wheel (7), the output drive (13) of which unit is non-rotatably connected to a sun wheel (15) of the second planet wheel set (10) and the planet wheels (11, 19) of which are in mesh with ring gears (12, 20), the rotational speed of which is the same, characterised in that the sun wheel (7) of the first planet wheel set (8) is non-rotatably disposed at the free end of a drive shaft (2), which is mounted in a bearing (3) of a stationary flange (4), and that the sun wheel (15) of the second planet wheel set (10) is helically toothed and mounted in overhung fashion via a bearing (16), which takes up axial and radial forces, in the hub carrier (17) or in the hub (21) or in a cover (23), which is non-rotatably connected to the hub (21).

2. Elevator drive according to Claim 1, characterised in that the drive shaft (2) is mounted between the sun wheel (7) of the first planet wheel set (8) and a brake (6) in the flange (4) of a brake housing (5).

3. Elevator drive according to Claim 1, characterised by means (18, 26, 27, 28) which secure the sun wheel (15) of the second planet wheel set (10) and the planet carrier (13) in relation to the bearing (16).

4. Elevator drive according to Claim 1, characterised in that the ring gears (12, 20) are non-rotatably mounted in the hub carrier (17) or in the hub (21).

5. Elevator drive according to Claim 1, characterised in that the hub (21) is mounted on both sides - related to its longitudinal cross section - via bearings (29, 30) on the hub carrier (17).

6. Elevator drive according to Claim 5, characterised in that one bearing (29) is disposed with its inner race in the hub (21, 23) and the other bearing (30) is disposed with its inner race on the hub carrier (17).

7. Elevator drive according to Claim 1, characterised in that the gear ratio between the first and the second planet wheel stage (8, 10) is not an integer.

8. Elevator drive according to Claim 1, characterised in that each planet wheel stage (8, 10) comprises four planet wheels (11, 19) which mesh simultaneously.

## Revendications

1. Mécanisme d'entraînement pour élévateur comportant un moteur qui entraîne un moyeu (21), monté de façon rotative par rapport à un support de moyeu fixe (17) par l'intermédiaire d'un engrenage planétaire à deux étages (9), dont le premier train planétaire (8) présente une denture hélicoïdale ainsi qu'une roue solaire entraînée (7) dont l'arbre de sortie (13) est relié de façon fixe avec une roue solaire (15) du deuxième train planétaire (10) et dont les roues planétaires (11, 19) sont en prise avec des couronnes (12, 20) tournant à la même vitesse, **caractérisé** en ce que la roue solaire (7) du premier train planétaire (8) est disposée de façon fixe à l'extrémité libre d'un arbre d'entraînement (2) qui est monté dans un palier d'une collerette fixe (4), et en ce que la roue solaire (15) du deuxième train planétaire (10) comporte une denture hélicoïdale et est montée au moyen d'un palier (16), sur lequel s'exercent des forces axiales et radiales, de façon mobile dans un support de palier (17) ou dans le moyeu (21) ou dans un chapeau (23) relié de façon fixe au moyeu (21).

2. Mécanisme d'entraînement pour élévateur selon la revendication 1, **caractérisé** en ce que l'arbre d'entraînement (2) est logé entre la roue solaire (7) du premier train planétaire (8) et un frein (6) monté dans la collerette (4) d'un carter de frein (5).

3. Mécanisme d'entraînement pour élévateur selon la revendication 1, **caractérisé** par des éléments (18, 26, 27, 28) qui maintiennent la roue solaire (15) du deuxième train planétaire (10) et le support planétaire (13) par rapport au palier (16).

4. Mécanisme d'entraînement pour élévateur selon la revendication 1, **caractérisé** en ce que les couronnes (12, 20) sont montées de façon fixe dans le support de moyeu (17) ou dans le moyeu (21).

5. Mécanisme d'entraînement pour élévateur selon la revendication 1, **caractérisé** en ce que le moyeu (21) est monté des deux côtés, par rapport à sa section longitudinale, sur le support de moyeu (17) à l'aide de paliers (29, 30).

6. Mécanisme d'entraînement pour élévateur selon la revendication 5, **caractérisé** en ce qu'un palier (29) est disposé dans le moyeu (21, 23) par sa bague intérieure et en ce que l'autre palier (30) est disposé sur le support de moyeu (17) par sa bague intérieure.

7. Mécanisme d'entraînement pour élévateur selon la revendication 1, **caractérisé** en ce que le rapport du nombre de dents entre le premier et le deuxième train planétaire (8, 10) n'est pas un nombre entier.

8. Mécanisme d'entraînement pour élévateur selon la revendication 1, **caractérisé** en ce que chaque train planétaire (8, 10) comporte quatre roues planétaires (11, 19) qui engrènent simultanément.
